# DEMANDE DE BREVET EUROPEEN

(11) **EP 1 078 813 A2**
(43) Date de publication de la demande: **28.02.2001**
(21) Numéro de dépôt: 00810725.2
(22) Date de dépôt: 15.08.2000
(51) Int. Cl.: B60P 1/43

(54) **Dispositif d'accès à une plate-forme de chargement d'un véhicule**

(30) Priorité: 27.08.1999 CH 158099
(71) Demandeur: Lanza, Giovanni, 1844 Villeneuve (CH)
(72) Inventeur: Lanza, Giovanni, 1844 Villeneuve (CH)
(74) Mandataire: Ganguillet, Cyril

(57) **Abrégé**

Le dispositif d'accès à une plate-forme de chargement (13) d'un véhicule utilitaire ou d'un véhicule de transport de personne comprend une rampe escamotable et inclinable (30), un cadre fixe (12) supportant la plate-forme (13), et un cadre mobile (20), logé à l'intérieur du cadre fixe et capable d'effectuer un déplacement limité par rapport au cadre fixe. La rampe est montée coulissante dans le cadre mobile et peut être entièrement dégagée de la plate-forme pendant que le cadre mobile effectue ledit déplacement limité.

## Description

La présente invention concerne un dispositif d'accès à une plate-forme de chargement d'un véhicule comprenant une rampe escamotable et inclinable.

Pour permettre l'accès à une plate-forme de chargement d'un véhicule, de préférence un véhicule utilitaire, et, par conséquent, permettre le passage du niveau du sol au niveau de la plate-forme, d'équipements pouvant être mus grâce à des roues, des roulettes ou des chenilles, on utilise généralement une rampe amovible. A cet effet, on appuie l'une des extrémités de cette rampe amovible sur le seuil de l'ouverture d'accès du véhicule et on pose l'autre extrémité sur le sol.

Cet arrangement, parfois de fortune, présente des inconvénients lors de sa manipulation et de son utilisation dont certains peuvent être préjudiciables à la sécurité des opérations de chargement. Ainsi, la liaison entre la rampe et le seuil de l'ouverture d'accès du véhicule peut être rompue sous l'effet de charge lors du passage de l'équipement à charger, entraînant alors la chute de cet équipement. De plus, par la présence de certaines parties du véhicule telles que les pare-chocs, les phares, etc., allant au-delà de l'aplomb du seuil de l'ouverture d'accès du véhicule, la rampe risque d'appuyer sur ces parties entraînant leur détérioration.

Le but de la présente invention est de mettre à disposition un dispositif d'accès à une plate-forme de chargement d'un véhicule utilisant une rampe et permettant une manipulation aisée et en toute sécurité de la rampe, ceci sans avoir à modifier la conception de la structure du véhicule ni la disposition de ses équipements externes, le véhicule pouvant être soit un véhicule utilitaire soit un véhicule de transport de personnes.

A cet effet, l'invention a pour objet un dispositif d'accès à une plate-forme de chargement d'un véhicule et comprenant une rampe escamotable et inclinable, caractérisé par un cadre fixe supportant la plate-forme, et par un cadre mobile, logé à l'intérieur du cadre fixe et capable d'effectuer un déplacement limité par rapport au cadre fixe, la rampe étant montée coulissante dans le cadre mobile et pouvant être entièrement dégagée de la plate-forme pendant que le cadre mobile effectue ledit déplacement limité.

Le dispositif selon l'invention permet de remédier aux inconvénients mentionnés ci-dessus des dispositifs d'accès à une plateforme de chargement connus. D'autre part, du fait que la rampe escamotable est logée sous le plancher du véhicule, il n'est plus nécessaire de trouver un espace pour la ranger à l'intérieur du véhicule. De plus, pour la ranger, il suffit de soulever son extrémité et de la faire coulisser.

Afin rendre facile la compréhension de l'invention, un dessin représentant un mode de réalisation du dispositif selon l'invention est présenté. Cela n'en limite pas pour autant la portée de cette invention.

Sur ce dessin,
- la figure 1 illustre, par une coupe longitudinale en élévation, le dispositif pour faciliter l'accès à une plate-forme de chargement d'un véhicule, le dispositif se trouvant hors service;
- la figure 2 illustre, par une coupe transversale en élévation selon la ligne A-A de la figure 1, le dispositif selon la figure 1;
- la figure 3 illustre, par une coupe longitudinale en élévation, le dispositif pour faciliter l'accès à une plate-forme de chargement d'un véhicule, le dispositif se trouvant dans une position de phase intermédiaire de fonctionnement;
- la figure 4 illustre, par une vue partielle selon B de la figure 3, le dispositif selon la figure 3;
- la figure 5 illustre, par une coupe longitudinale en élévation, le dispositif pour faciliter l'accès à une plate-forme de chargement d'un véhicule, le dispositif se trouvant en position de service; et
- la figure 6 illustre, par une vue partielle selon C de la figure 5, le dispositif selon la figure 5.

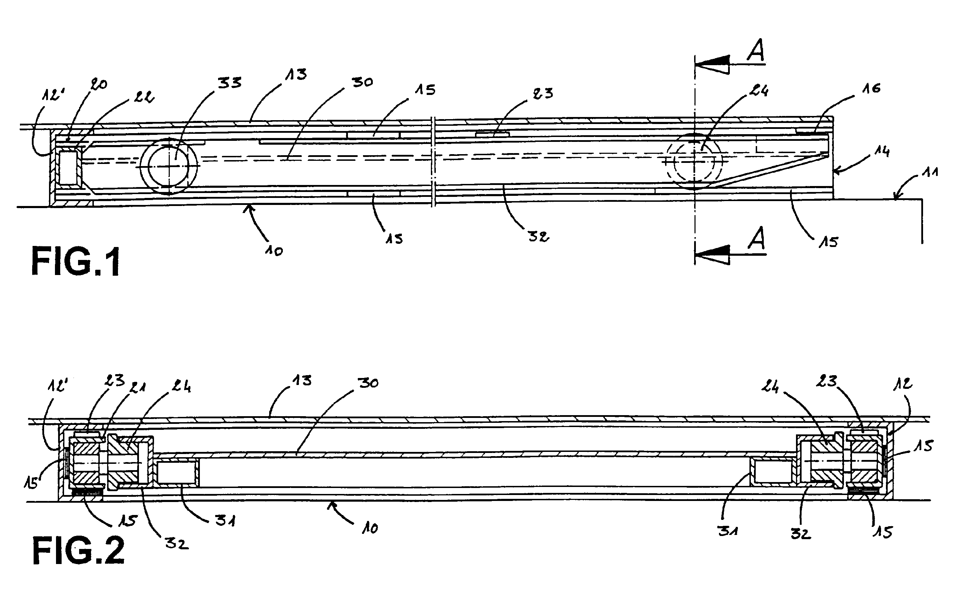

Du véhicule sur lequel est disposé le dispositif de l'invention, les figures 1 et 2 ne représentent de manière très schématique que le plancher 10, avec la partie arrière 11 dudit plancher sur laquelle se referme la ou les portes arrière(s) du véhicule.

Le plancher 10 supporte un cadre fixe 12, 12' sur lequel est fixée une plate-forme de chargement 13. Le cadre fixe comprend deux longerons 12 de section en U renversé et une traverse arrière 12', ce qui lui donne la forme d'un parallélépipède rectangle. La face 14 de ce parallélépipède, qui se trouve au regard de l'ouverture d'accès du véhicule et, sur le dessin, à proximité de la partie arrière 11 du plancher du véhicule, est ouverte.

Un cadre mobile 20, composé également de deux longerons 21 de section en U renversé et d'une traverse arrière 22, est logé à l'intérieur du cadre fixe 12 et est capable d'effectuer, grâce à des plaques de glissement 15 et à des butées 16 et 23, un déplacement limité par rapport au cadre fixe 12.

Les plaques de glissement 15 sont solidaires du cadre fixe 12 et disposées en des positions prédéterminées sur les parois internes du cadre fixe et les butées 16 et 23, allant par paire, sont agencées, d'une part, sur le cadre fixe 12 et, d'autre part, sur le cadre mobile 20. Les positions des butées sur leurs cadres respectifs sont prédéterminées de façon que l'extrémité du cadre mobile se trouve au moins à l'aplomb de la partie arrière 11 du plancher du véhicule.

Une rampe 30 destinée à permettre l'accès à la plate-forme de chargement 13 et ayant la forme d'un plateau est montée coulissante dans le cadre mobile 20. Cette rampe est supportée par deux paires de longerons 31 et 32 accolés l'un à l'autre. Grâce à deux paires de galets 24 et 33 tourillonnés respectivement sur le cadre mobile 20 et sur la rampe 30, la rampe peut coulisser par rapport au cadre mobile. Les galets 24 sont portés par des tourillons solidaires de plots fixés aux longerons du cadre mobile 20 et les galets 33 par des tourillons solidaires de plots fixés aux longerons de la rampe.

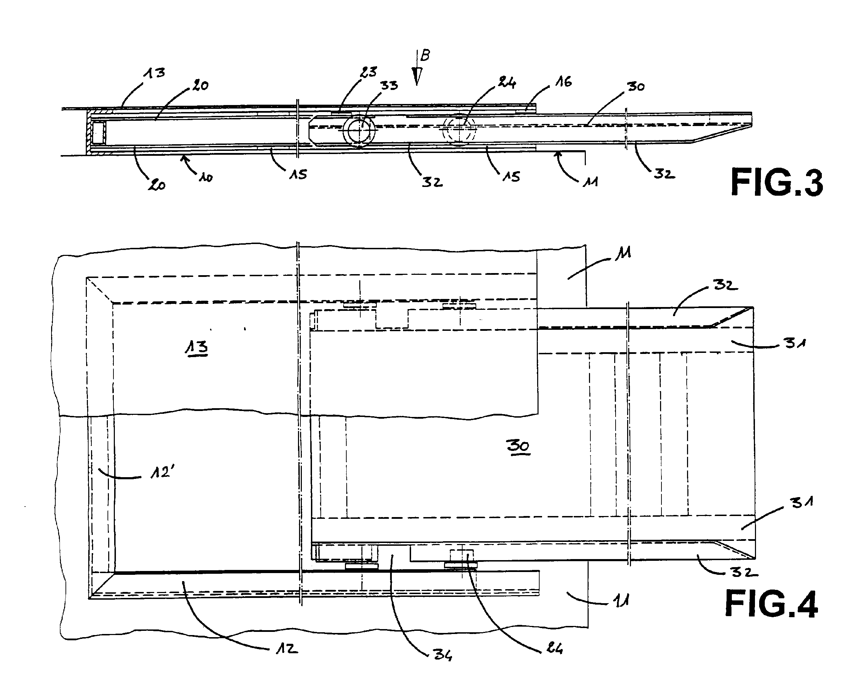

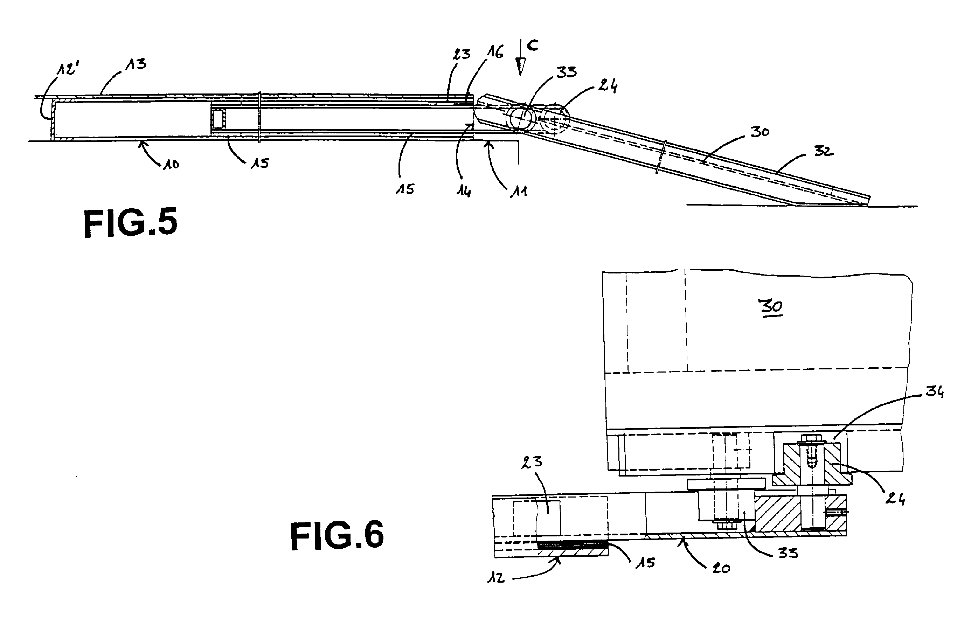

Afin d'amener la rampe 30 dans une position telle qu'elle permette l'accès à la plate-forme de chargement 13 comme représenté à la figure 5, il convient tout d'abord de tirer sur cette rampe. La rampe 30 est alors en partie extraite du cadre mobile 20. Cette position intermédiaire est représentée aux figures 3 et 4.

Comme cela est représenté sur la figure 6, les plots de support des tourillons montés sur le cadre mobile 20 servant de butée pour les galets 33 montés sur la rampe 30, le mouvement de coulissement de la rampe par rapport au cadre mobile 20 est alors arrêté. En poursuivant la traction, le cadre mobile 20 est ensuite extrait du cadre fixe jusqu'à la position de butée déterminée par la position des butées 16 et 23.

Ainsi, la rampe peut être entièrement dégagée de la plate-forme pendant que le cadre mobile effectue le déplacement limité par rapport au cadre fixe.

Comme cela est représenté sur la figure 5, une fois que la rampe 30 puis le cadre mobile 20 sont arrivés tous deux en bout de course, la rampe 30 peut s'incliner en position dégagée en pivotant autour de l'axe de la paire de galets 33 grâce à des entailles 34 pratiquées dans la partie supérieure des rails 32, au niveau de la paire de galets 24. L'extrémité de rampe peut ainsi être posée sur le sol. La hauteur de l'arête arrière de la rampe 30 en position dégagée est approximativement correspondante avec la hauteur de la plate-forme de chargement 13, ce qui assure quasiment la liaison de l'autre extrémité de la rampe avec la plate-forme 13.

Le fait que le cadre mobile 20 puisse être en partie extrait du cadre fixe 12 autorise l'inclinaison de la rampe 30 tout en évitant que cette dernière heurte la partie arrière 11 du plancher du véhicule.

Afin d'escamoter la rampe 30, les opérations suivantes doivent être effectuées:
- relever la rampe jusqu'à une position parallèle à celle du plancher 10 correspondant en général à l'horizontale;
- pousser sur la rampe de façon que les galets 24 s'engagent respectivement dans leur rail 32;
- poursuivre la poussée de façon, d'une part, que la rampe soit totalement rentrée dans le cadre mobile 20, puis, d'autre part, que le cadre mobile 20 soit à son tour totalement rentré dans le cadre fixe.

## Revendications

1. Dispositif d'accès à une plate-forme de chargement (13) d'un véhicule et comprenant une rampe escamotable et inclinable (30), caractérisé par un cadre fixe (12, 12') supportant la plate-forme (13), et par un cadre mobile (20), logé à l'intérieur du cadre fixe et capable d'effectuer un déplacement limité par rapport au cadre fixe, la rampe étant montée coulissante dans le cadre mobile et pouvant être entièrement dégagée de la plate-forme pendant que le cadre mobile effectue ledit déplacement limité.

2. Dispositif selon la revendication 1, caractérisé en ce que le cadre fixe (12) et le cadre mobile (20) sont constitués de deux longerons (12, 21) et d'une traverse arrière (12', 22).

3. Dispositif selon l'une des revendications précédentes, caractérisé en ce qu'il comporte des plaques de glissement (15) destinées au déplacement du cadre mobile (20) sur le cadre fixe (12) et des butées (16, 23) pour limiter ce déplacement.

4. Dispositif selon l'une quelconque des revendications précédentes, caractérisé en ce que deux paires de galets (24, 33) tourillonnés respectivement sur le cadre mobile (20) et sur la rampe permettent le coulissement de la rampe.

5. Dispositif selon la revendication 4, caractérisé en ce que les plots de support des tourillons montés sur le cadre mobile (20) servent de butée pour les galets (33) montés sur la rampe (30).

6. Dispositif selon l'une des revendications 4 ou 5, caractérisé en ce que des entailles (34) sont agencées dans la partie supérieure des rails (32) de la rampe (30) pour permettre l'inclinaison de la rampe (30) en position dégagée.

7. Dispositif selon la revendication 6, caractérisé en ce que la hauteur de l'arrête arrière de la rampe (30) en position dégagée et inclinée est approximativement correspondante avec la hauteur de la plate-forme (13).
